# EUROPEAN PATENT SPECIFICATION

(11) **EP 3 991 459 B1**
(45) Date of publication and mention of the grant of the patent: **18.09.2024**
(21) Application number: 20737312.7
(22) Date of filing: 15.06.2020
(51) Int. Cl.: H04W 4/50, H04W 12/06, H04W 12/37, H04W 12/40, H04W 8/18

(54) **METHOD AND APPARATUS FOR ENABLING 5G SERVICES WITH PRE-5G UNIVERSAL INTEGRATED CIRCUIT CARD (UICC)**
VERFAHREN UND VORRICHTUNG ZUM AKTIVIEREN VON 5G-DIENSTEN MIT EINER UNIVERSELLEN VOR-5G-CHIPKARTE (UICC)
PROCÉDÉ ET APPAREIL PERMETTANT DES SERVICES 5G À L'AIDE D'UNE CARTE DE CIRCUIT INTÉGRÉ UNIVERSELLE PRÉ-5G (UICC)

(30) Priority: 26.06.2019 US 201916453504
(43) Date of publication of application: 04.05.2022
(73) Proprietor: QUALCOMM INCORPORATED, San Diego, California 92121-1714 (US)
(72) Inventor: CHIKKALA, Venkata Durga Vinod, San Diego, CA 92121-1714 (US); GUDIVADA, Naga Chandan Babu, San Diego, CA 92121-1714 (US); NELUROUTH, Rajendra Prasad, San Diego, CA 92121-1714 (US); REDDEM, Venkata Konda Reddy, San Diego, CA 92121-1714 (US); KOTHAPALLI VENKATA, Phani Pradeep Kumar, San Diego, CA 92121-1714 (US)
(74) Representative: Tomkins & Co
(86) International application number: PCT/US2020/037747
(87) International publication number: WO 2020/263609

(56) References cited:
- EP-A1- 3 468 130
- WO-A1-2019/105695
- ANONYMOUS: "3 Generation Partnership Project; Technical Specification Group Services and System Aspects; Security architecture and procedures for 5G system (Release 15)", 3GPP STANDARD; TECHNICAL SPECIFICATION; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.2.0, 21 September 2018 (2018-09-21), pages 1 - 175, XP051487210
- ERICSSON: "AUSF/UDM selection using SUCI", vol. SA WG2, no. Newport Beach, CA, USA; 20180528 - 20180601, 27 May 2018 (2018-05-27), XP051448295, Retrieved from the Internet <URL:http://www.3gpp.org/ftp/Meetings%5F3GPP%5FSYNC/SA2/Docs/> [retrieved on 20180527]

## Description

(deleted)

### BACKGROUND

### Field

The present disclosure relates generally to communication systems, and more particularly, to enabling 5G New Radio (NR) based services through use of a universal integrated circuit card (UICC) that does not fully independently support 5G NR based services.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple radio access technologies (RATs) have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

Further, while access to services in an LTE based network was associated with a user equipment (UE) international mobile subscriber identity (IMSI), services in a 5G NR based network are associated with a UE Subscription Permanent Identifier (SUPI). The SUPI may be further modified to generate a Subscription Concealed Identifier (SUCI) while contains a concealed SUPI. As such, there is a need to enable UEs to access 5G NR based services while still being supported by pre-5G based UICCs. EP 3 468 130 A1 discloses a method for transmitting to a physical or virtual element of a telecommunications network an encrypted subscription identifier stored in a security element, characterized in that it consists in pre-calculating proactively at the occurrence of an event the encrypted identifier using a key and storing it in a file or memory of the security element with a parameter enabling the key to be calculated by the element of the telecommunications network in order to be able to transmit to the element of the telecommunications network the encrypted identifier and the parameter, without having to compute the encrypted identifier when the terminal is asking for it. WO 2019/105695 A1 discloses a method of operating a first network node, the method comprising:
receiving an initial registration request message from a UE; responsive to the initial registration request message, initiating an authentication procedure with a second network node and the UE that establishes a shared key between the first network node and the UE; activating Non-Access Stratum, NAS, security with the UE based on the shared key; and sending to the UE a registration response message that is integrity protected based on the shared key.
3GPP TS 33.501, V15.2.0 "3rd Generation Partnership Project; Technical Specification Group Services and System Aspects; Security architecture and procedures for 5G system (Release 15)" specifies the security architecture, i.e., the security features and the security mechanisms for the 5G System and the 5G Core, and the security procedures performed within the 5G System including the 5G Core and the 5G New Radio.

### SUMMARY

The invention is defined by the subject-matter of the independent claims. Preferred embodiments are set out in the dependent claims.

### BRIEF DESCRIPTION OF THE DRAWINGS

FIG. 1 is a diagram illustrating an example of a wireless communications system and an access network.
FIG. 2 is a block diagram illustrating a wireless communication device according to various aspects.
FIG. 3 is a diagram illustrating an example of a base station and user equipment (UE) in an access network.
FIG. 4 is a diagram illustrating an example wireless communications system with a UE and multiple RATs.
FIG. 5 is a flowchart of a method of wireless communication.
FIG. 6 is another flowchart of a method of wireless communication.
FIG. 7 is a conceptual data flow diagram illustrating the data flow between different means/components in an example apparatus.
FIG. 8 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

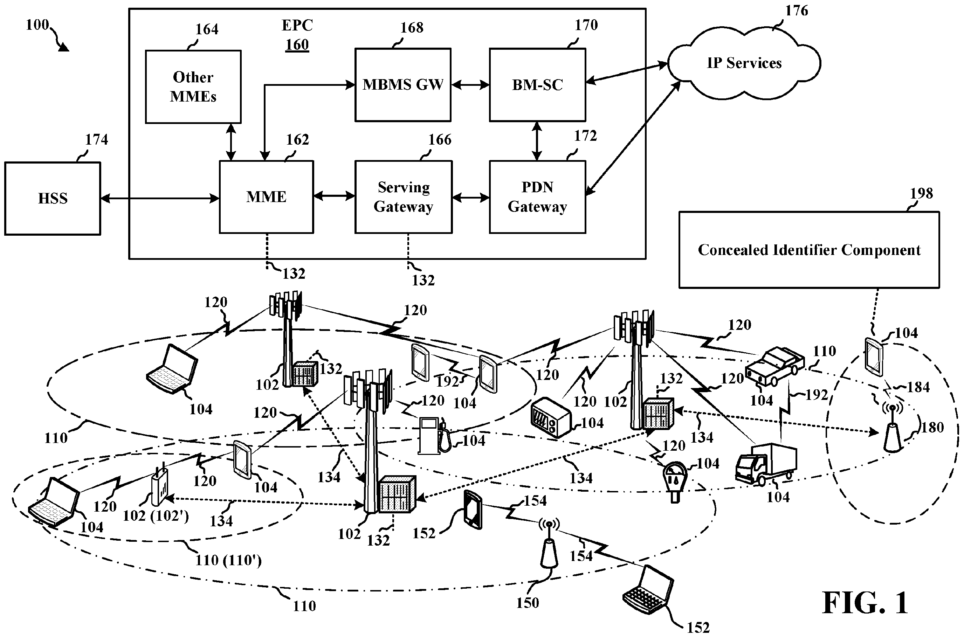

FIG. 1 is a diagram illustrating an example of a wireless communications system and an access network 100. The wireless communications system (also referred to as a wireless wide area network (WWAN)) includes base stations 102, UEs 104, and an Evolved Packet Core (EPC) 160. The base stations 102 may include macro cells (high power cellular base station) and/or small cells (low power cellular base station). The macro cells include base stations. The small cells include femtocells, picocells, and microcells.

The base stations 102 (collectively referred to as Evolved Universal Mobile Telecommunications System (UMTS) Terrestrial Radio Access Network (E-UTRAN)) interface with the EPC 160 through backhaul links 132 (e.g., S1 interface). In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100 MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 192. The D2D communication link 192 may use the DL/UL WWAN spectrum. The D2D communication link 192 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

The gNodeB (gNB) 180 may operate in millimeter wave (mmW) frequencies and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band has extremely high path loss and a short range. The mmW base station 180 may utilize beamforming 184 with the UE 104 to compensate for the extremely high path loss and short range.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service and may be responsible for session management (start/stop) and for collecting eMBMS related charging information.

The base station may also be referred to as a gNB, Node B, evolved Node B (eNB), an access point, a base transceiver station, a radio base station, a radio transceiver, a transceiver function, a basic service set (BSS), an extended service set (ESS), or some other suitable terminology. The base station 102 provides an access point to the EPC 160 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a toaster, or any other similar functioning device. Some of the UEs 104 may be referred to as loT devices (e.g., parking meter, gas pump, toaster, vehicles, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may include a concealed identifier component 198. Initially, although the following description may be focused towards enabling access to 5G NR based services for a UE 104 that may not have a fully enabled 5G NR based UICC, the concepts described herein may be applicable to any situation in which an UICC installed in a UE is not fully compatible with services available from a network from which the UE intends to receive services. In an aspect, concealed identifier component 198 may enable UE 104 to generate a concealed identifier to assist the UE 104 with accessing services. For example, the services may be 5G NR based services. As used herein, services may refer to any activities that use a concealed identifier for the UE 104 when interacting with the network (e.g., 5G NR based network). In an aspect, a UE 104 may have a Subscription Unit Permanent Identifier (SUPI) that uniquely identifies the UE 104 in the network. In such an aspect, concealed identifier component 198 may be used by UE 104 to generate a SUCI from the SUPI for 5G and pre-5G cards (e.g., UICCs) on 5G devices (e.g., UE 104) even if UICC does not fully support 5G services.

In an operational aspect, a UE 104 may use information, such as but not limited to, a protection scheme identifier (e.g., ECIES A, ECIES B, Proprietary, etc.), a Home Network (HN) public key, a routing indicator (RI) to assist with enabling access to services (e.g., 5G NR based services). Such information may be stored in memory such as a Secure File System (SFS), in software, etc. Further, in the operational aspect, where a card (e.g., UICC) associated with the UE 104 is a pre-5G based card, concealed identifier component 198 may prompt the UE 104 to read the information (e.g., protection scheme, HN public key, RI, etc.) from the memory (e.g., Secure File System, software, etc.). Additionally, or in an alternative operational aspect, where a card (e.g., UICC) associated with the UE 104 is 5G based card, concealed identifier component 198 may prompt the UE 104 to read parameters from elementary files (e.g., EF-Suci_Calc_Info, EF-RI, etc.) based on service availability in the 5G based card. If the 5G based card supports SUCI calculation, then a GET_IDENTITY request may be sent to the 5G based card to obtain the SUCI. In an aspect, the SUCI may be used for a registration procedure to camp on a 5G NR based network, thereby allowing access to 5G NR services.

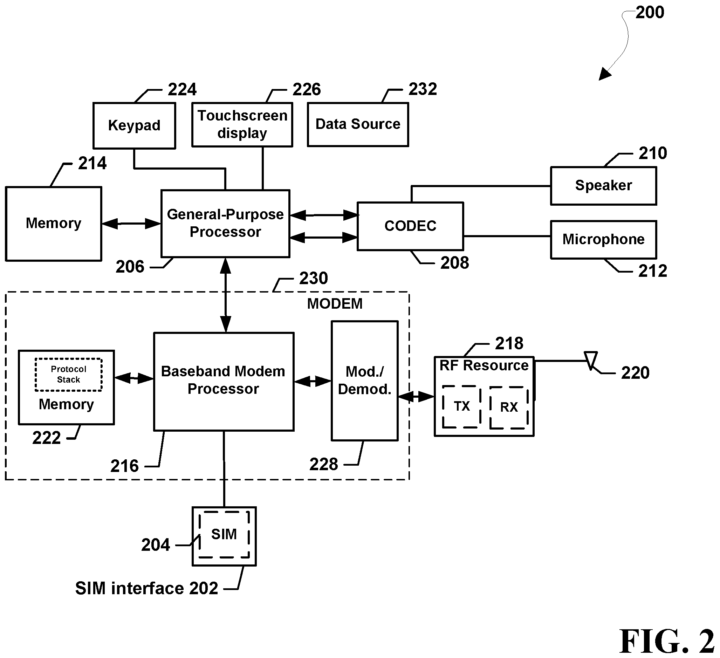

FIG. 2 is a component block diagram of a wireless communication device 200 suitable for implementing various aspects. With reference to FIGs. 1 and 2, in various aspects, the wireless communication device 200 may be similar to the wireless communication device 102. The wireless communication device 200 may include a subscriber identity module (SIM) interface 202, which may receive an identity module SIM 204 that is associated with a subscription.

A SIM in various aspects may be a UICC that is configured with SIM and/or USIM (Universal Subscriber Identity Module) applications, enabling access to, for example, wireless communication networks. The UICC may also provide storage for a phone book and other applications. A SIM used in various aspects may contain user account information, an international mobile subscriber identity (IMSI), a set of SIM application toolkit (SAT) commands and storage space. A SIM card may further store a Home-Public-Land-Mobile-Network (HPLMN) code to indicate the SIM card network operator provider. An Integrated Circuit Card Identity (ICCID) SIM serial number may be printed on the SIM card for identification. The SIM may be an embedded SIM (e.g., a UICC) that is permanently embedded in a communication device.

The wireless communication device 200 may include at least one controller, such as a general-purpose processor 206, which may be coupled to a coder/decoder (CODEC) 208. The CODEC 208 may in turn be coupled to a speaker 210 and a microphone 212. The general-purpose processor 206 may also be coupled to at least one memory 214. The memory 214 may be a non-transitory computer-readable storage medium that stores processor-executable instructions. For example, the instructions may include routing communication data relating to the first or second subscription through a corresponding baseband-RF resource chain. The memory 214 may store an operating system, as well as application software and executable instructions. The memory 214 may also store application data.

The general-purpose processor 206 may be coupled to a modem 230. The modem 230 may include at least one baseband modem processor 216, which may be coupled to a memory 222 and a modulator/demodulator 228. The baseband modem processor 216 may include physically or logically separate baseband modem processors. The modulator/demodulator 228 may receive data from the baseband modem processor 216 and may modulate a carrier signal with encoded data and provide the modulated signal to an RF resource 218 for transmission. The modulator/demodulator 228 may also extract an information-bearing signal from a modulated carrier wave received from an RF resource 218, and may provide the demodulated signal to the baseband modem processor 216. The modulator/demodulator 228 may be or include a digital signal processor (DSP).

The baseband modem processor 216 may read and write information to and from the memory 222. The memory 222 may also store instructions associated with a protocol stack, such as a protocol stack. A protocol stack generally includes computer executable instructions to enable communication using a radio access protocol or communication protocol. The protocol stack typically includes network protocol layers structured hierarchically to provide networking capabilities. A protocol stack may be associated with the SIM card 204 (e.g., a UICC) and/or a subscription. For example, the protocol stack may be associated with the SIM 204. The memory 222 may store one or more protocol stacks (not illustrated).

The SIM 204 in the wireless communication device 200 may be coupled to the modem 230 and may be associated with or permitted to use at least one RF resource chain per RAT. A RAT (e.g., an LTE RAT, 5G NR RAT) may be associated with RF resource 218. Wireless communication device 200 may operate and communicate with SIM 204 via SIM interface 202. The SIM interface 202 may communicate with SIM 204 using a plurality of input and output lines matched to pins on SIM 204. SIM interface 202 may operate SIM 204 using a plurality of input lines including, but not limited to, a voltage line, a reset line, a clock line, a ground line, and a data line. The SIM interface 202 may also receive output from SIM 204 via a plurality of output lines including, but not limited to, a voltage line, a clock line, a ground line, and a data line.

Each baseband-RF resource chain may include the baseband modem processor 216 to perform baseband/modem functions for communicating with/controlling a RAT, and one or more amplifiers and radios, referred to generally herein as RF resources. In some aspects, baseband-RF resource chains may share a common baseband modem processor 216 (i.e., a single device that performs baseband/modem functions for all RATs on the wireless communication device). Alternatively, each baseband-RF resource chain may include the physically or logically separate baseband processors.

The RF resources 218 may include transceivers associated with one or more RATs and may perform transmit/receive functions for the wireless communication device 200 on behalf of their respective RATs. The RF resources 218 may include separate transmit and receive circuitry. The RF resources 218 may be coupled to a wireless antenna (e.g., a wireless antenna 220). The RF resources 218 may also be coupled to the modem 230 (e.g., via the modulator/demodulator 228, or alternatively via the baseband modem processor 216 or another component). The term "RF resource chain" may include an RF resource (e.g., the RF resource 218), an antenna (e.g., the antenna 220), and one or more components of the modem 230.

In some aspects, the general-purpose processor 206, memory 214, baseband processor(s) 216, and RF resource 218 may be included in the wireless communication device 200 as a system-on-chip. Conversely, the general-purpose processor 206, memory 214, baseband processor(s) 216, and RF resource 218 may be the packaged as separate components in a device. SIM 204 and corresponding interface 202 may be external to the system-on-chip. Further, various input and output devices may be coupled to components on the system-on-chip, such as interfaces or controllers. The wireless device 200 may or may not include input components such as, but not limited to, a keypad 224, data source 232, and/or a touchscreen display 226. Data source 232 may be a sensor, appliance, or any device capable of providing data to the wireless communication device.

In some aspects, the keypad 224, touchscreen display 226, data source 232, microphone 212, or a combination thereof, may perform the function of receiving the request to initiate an outgoing communication. For example, the touchscreen display 226, keypad 224, or microphone 212 may function to initiate an outgoing communication. As another example, the request to initiate the outgoing communication may be user driven or device driven (i.e., algorithmically driven). Interfaces may be provided between the various software modules and functions in the wireless communication device 200 to enable communication between them.

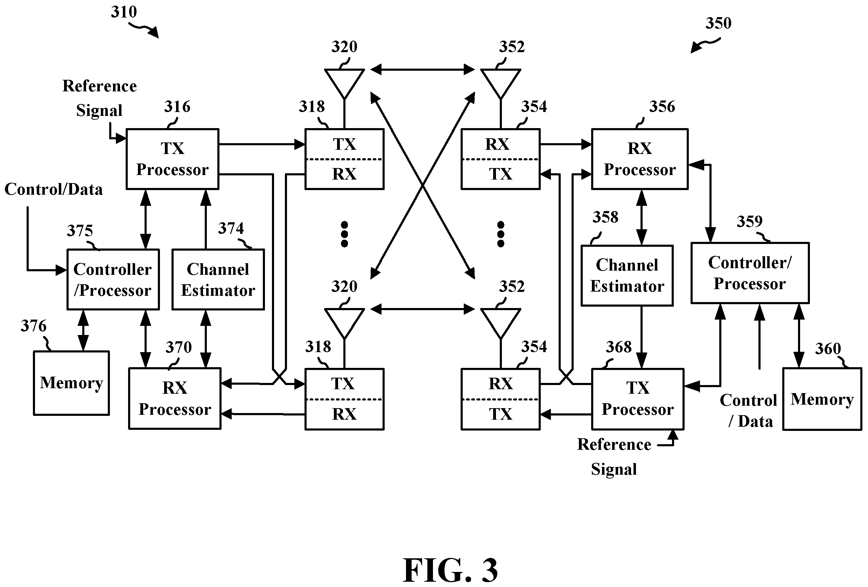

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a RRC layer, and layer 2 includes a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

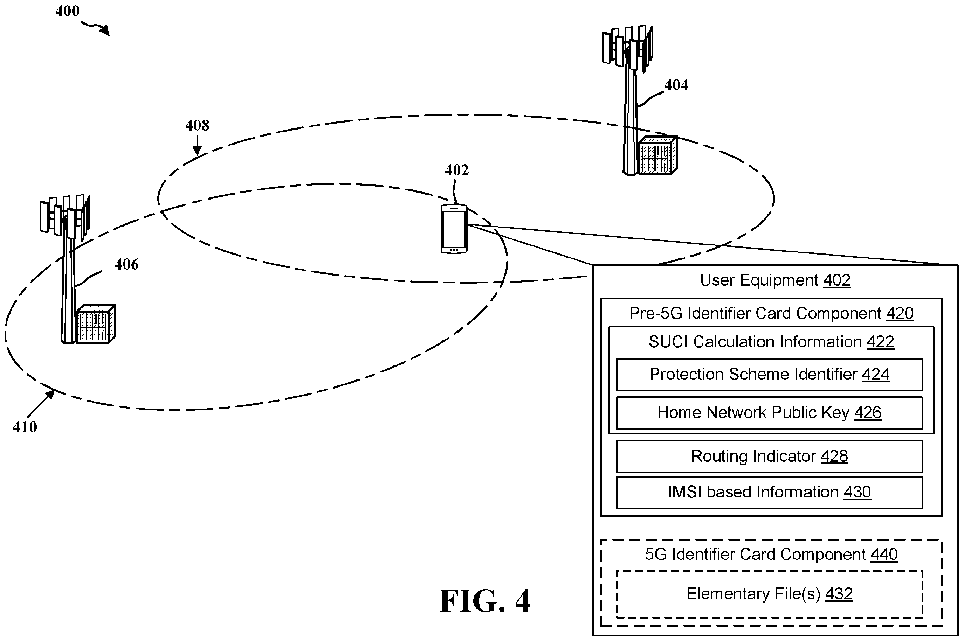

FIG. 4 is a diagram illustrating an example wireless communications system 400 with a UE 402 that may communicate with one or more base stations (404, 406) using one or more RATs (408, 410). In an aspect, UE 402 may be camped on a cell associated with a RAT (e.g., LTE, 3G, 2G, EV-DO, etc.). For example, UE 402 may be camped on a 4G cell (e.g., communicating with base station 404 using RAT 408). Further, services may be available through another RAT (e.g., 5G, LTE, etc.). For example, to be able to access services available through a 5G RAT, the UE 402 may camp on a 5G RAT (e.g., communicating with base station 406 using RAT 410) using concealed identifier generated by the UE 402.

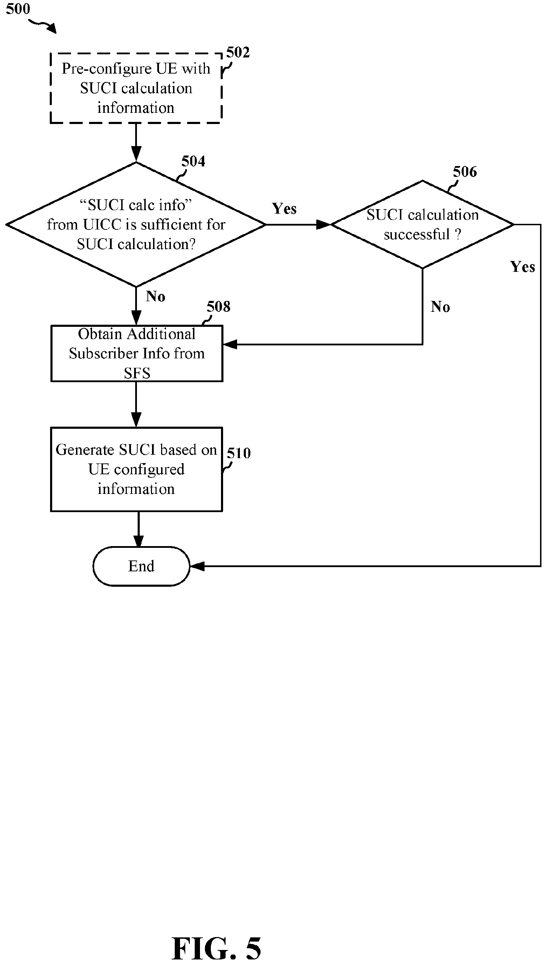

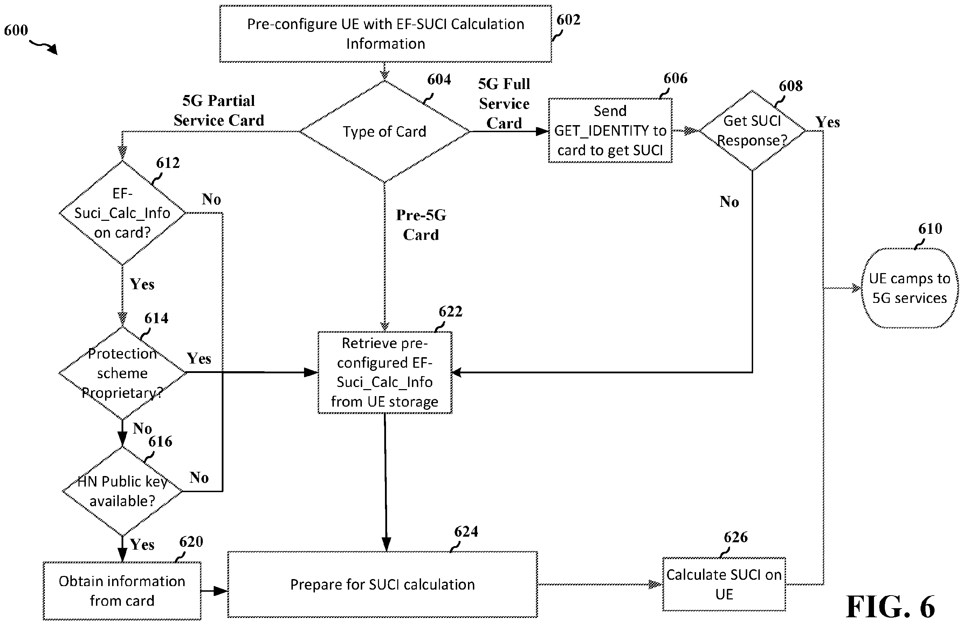

UE 402 may include pre-5G identifier card component 420 and/or, in an optional aspect, 5G identifier card component 440 which may enable UE 402 to access services from a RAT (e.g., 5G NR based RAT) while using a concealed identifier (e.g., SUCI). In an aspect, pre-5G identifier card component 420 may include information, such as but not limited to, SUCI calculation information 422, routing indicator 428, and IMSI based information 430. In an aspect, SUCI calculation information 422 may include EFs used by UE 402 for support of subscribe identity privacy. For example, SUCI calculation information 422 may include parameters such as, but not limited to, a Protection Scheme Identifier 424, Home Network Public Key 426, etc., which may be used in calculating the SUCI. Further, routing indicator 428 may be obtained from an EF (e.g., EF-RI). As it is described in further depth with reference to FIGs. 5 and 6, routing indicator 428, and IMSI based information 430 may also be used by pre-5G identifier card component 420 in calculating the SUCI. IMSI based information 430 may include values, such as but not limited to, mobile country codes (MCC), Mobile Network Code (MNC), mobile subscription identification number (MSIN), etc. In an operational aspect, pre-5G identifier card component 420 may calculate a SUCI based on Protection Scheme Identifier 424 and Home Network Public Key 426 from SUCI calculation information 422, routing indicator 428, and MCC, MNC, and MSIN from IMSI based information 430.

As noted above, in an optional aspect, UE 402 may include 5G identifier card component 440 which may include elementary files (EFs) 432. In an aspect, EFs 432 may be defined in a service table. For example, the service table and EFs may be EF_{UST} (USIM Service Table) Service Numbers 124 (Service n⁰124) and/or 125 (Service n⁰125) as defined in 3GPP TS 31.102 Section 4.2.8 Release 15. Service 124 indicates whether Subscriber Identity Privacy Support is available, and Service 125 indicates whether SUCI calculation by the USIM is available. In an operational aspect, where UE 402 includes 5G identifier card component 440, a request may be made to determine whether Service No. 124 and 125 are available. Where 5G identifier card component 440 indicates that both of these service number values are available, the UE may generate its own SUCI value using the UICC. Where 5G identifier card component 440 indicates that Service No. 124 is available, but Service No. 125 is not available or unable to be obtained, then UE 402 may calculate the SUCI with further assistance from information obtained from pre-5G identifier card component 420.

FIG. 5 is a flowchart 500 of a method of wireless communication, according to the claimed invention. The method is performed by a UE (e.g., UE 104, UE 402). In an optional aspect, at 502, the UE may be pre-configured with information sufficient to generate a concealed identifier. The information sufficient to generate the concealed identifier may assist the UE with generating a SUCI to enable the UE to access services from a RAT (e.g., 5G RAT) that may use different UE identifying parameters than may be available through a UICC associated with the UE. Such pre-configuring may be done through over-the-air updates, at initial activation, based on user input, etc. As noted above, services may refer to any activities that use a concealed identifier for the UE when interacting with the network (e.g., a 5G registration procedure). As also noted above, the concealed identifier information may be stored in memory such as a SFS, in software, etc. In an aspect, UE 402 Pre-5G identifier card component 420 may be pre-configured with information sufficient to generate the concealed identifier such as described at 502.

At 504, the UE determines whether initial subscriber information available from the UICC is sufficient to enable calculate a concealed identifier (e.g., SUCI). In an aspect, where the UE is attempting to camp on a 5G based network, the UE use a SUCI during the registration procedure. In such an aspect, if the UE has a 5G enabled UICC, then information available from the UICC (e.g., EFs, parameters associated with EFs, etc.) may sufficient to calculate the SUCI. By contrast, if the UE has a pre-5G enabled UICC, then information available from the UICC alone may not be sufficient to calculate the SUCI. In an aspect, UE 402 pre-5G identifier card component 420 and/or 5G identifier card component 440 may be configured to determine whether initial subscriber information available from the UICC is sufficient to calculate a concealed identifier (e.g., SUCI) as described at 504.

If, at 504, the UE determines that there is sufficient initial subscriber information available from the UICC to calculate a concealed identifier (e.g., SUCI), then the UE may attempt to calculate the SUCI, and at 506, the UE determines whether the SUCI was successfully calculated. In an aspect, where the UE has been configured with a 5G enabled UICC, the UE may use initial subscriber information available through the 5G enabled UICC (e.g., EF_{UST} (USIM Service Table) Service Numbers 124 (Service n⁰124) and/or 125 (Service n⁰125) as defined in 3GPP TS 31.102 Section 4.2.8 Release 15). In an aspect, UE 402 5G identifier card component 430 may be configured to determine whether the SUCI has been successfully calculated as described at 506. If at 506, the UE determines that the SUCI was successfully calculated, then the process may end.

If, at 504, the UE determines that there is not sufficient initial subscriber information available from the UICC to calculate the SUCI, or if, at 506, the UE determines that the SUCI was not successfully calculated then, at 508, the UE obtains additional subscriber information from secure storage. In an aspect, the additional subscriber information may be the pre-configured secure connectivity information noted at 502. In an aspect, the additional subscriber information may be IMSI based information, such as but not limited to, MCC, MNC, and MSIN. In another aspect, the additional subscriber information may further include a protection scheme identifier (e.g., ECIES A, ECIES B, Proprietary, etc.), a HN public key, a RI, etc. In an aspect, UE 402 pre-5G identifier card component 420 and/or 5G identifier card component 440 may be configured to obtain additional subscriber information as described at 506.

At 510, the UE generates a SUCI based on the initial subscriber information along with the additional subscriber information. In an aspect, the UE may calculate the SUCI based on information (additional and/or initial), such as but not limited to, Protection Scheme Identifier, Home Network Public Key, routing indicator, MCC, MNC, MSIN, etc. In an aspect, UE 402 pre-5G identifier card component 420 may generate a SUCI based on the initial subscriber information along with the additional subscriber information as describe at 510.

FIG. 6 is another flowchart 600 of a method of wireless communication, which is not according to the claimed invention. The method may be performed by a UE (e.g., UE 104, UE 402). Although the describe provided with respect to FIG. 6 focuses on a 5G-centric aspect, the process may be applicable to other RAT implementations. Further, UE 402 and at least one of pre-5G identifier card component 420, 5G identifier card component 440, or any combination thereof, may be configured to perform steps 602 through 626.

At 602, the UE may be pre-configured with EFs that may assist with calculation of a SUCI. In an aspect, the EFs may be EF_{SUCI_Calc_Info} as described in 3GPP TS 31.102 Section 4.4.11.8, Release 15. For example, the EFs may include parameters, such as but not limited to, a protection scheme identifier (e.g., ECIES A, ECIES B, Proprietary, etc.), a HN public key, a RI, etc. The EFs may be stored in memory such as a SFS, in software, etc. In an aspect, whether the stored pre-configured information is used by the UE to calculate the SUCI may be based, at least in part, on a type of card (e.g., UICC) the UE has installed.

If, at 604, the UE is configured with a fully enabled 5G UICC, then at 606 a GET IDENTITY request may be sent to the UICC to obtain information used to calculate the SUCI. In an aspect, a UICC may be a fully enabled 5G UICC when both Service No. 124 and Service No. 125 are available. Further, if, at 608, the UICC returns the proper requested information and a SUCI is generated, then at 610 the UE may camp on a 5G based cell and may access 5G based services using the generated SUCI.

If, at 604, the UE in configured with a partially enabled 5G UICC, then the UE may determine what information may be able to be obtained from the UICC. For example, a UICC may be a partially enabled 5G UICC where some information used to generate the SUCI is present on the UICC but other information may be available from memory (e.g., SFS) on the UE.

At 612, the UE determines whether EFs (e.g., EF_Suci_Calc_Info) used to calculate the SUCI may be obtained from the UICC (e.g., determine whether Service No. 125 is available). If at 612, the UE determines that the EFs used to calculate the SUCI may be obtained from the UICC, the UE may, at 614, determine whether a protection schemed used as part of the SUCI generation is a default (e.g., ECIES A, ECIES B) or a proprietary scheme. If at 614, the UE determines that a default protection scheme is to be used, the UE may, at 616 determine whether a HN public key is available from the UICC. If at 616, the HN public key is available from the UICC, then at 610 the UE may obtain information (e.g., EF_Suci_Calc_info from 612, default protection scheme from 614, HN public key from 616) for the UICC to assist in generating the SUCI.

Further, if the UE, at 612, determines that the EFs used to calculate the SUCI may not be obtained from the UICC, or if the UE, at 614, determines that a proprietary protection scheme may be used to calculate the SUCI, or if the UE, at 616, determines that HN public key is not available from the UICC, or if at 604, the UE is configured with a pre-5G UICC, or if at 608, the UICC does not return the proper requested information and a SUCI may not be generated, then at 622, the UE may retrieve information used to assist with generating the SUCI from memory (e.g., SFS) on the UE.

At 624, the UE may organize the information used to generate the SUCI, obtained from the UICC and/or from memory on the UE, and at 626, the UE may calculate the SUCI. Thereafter, at 610 the UE may camp on a 5G based cell and may access 5G based services using the generated SUCI.

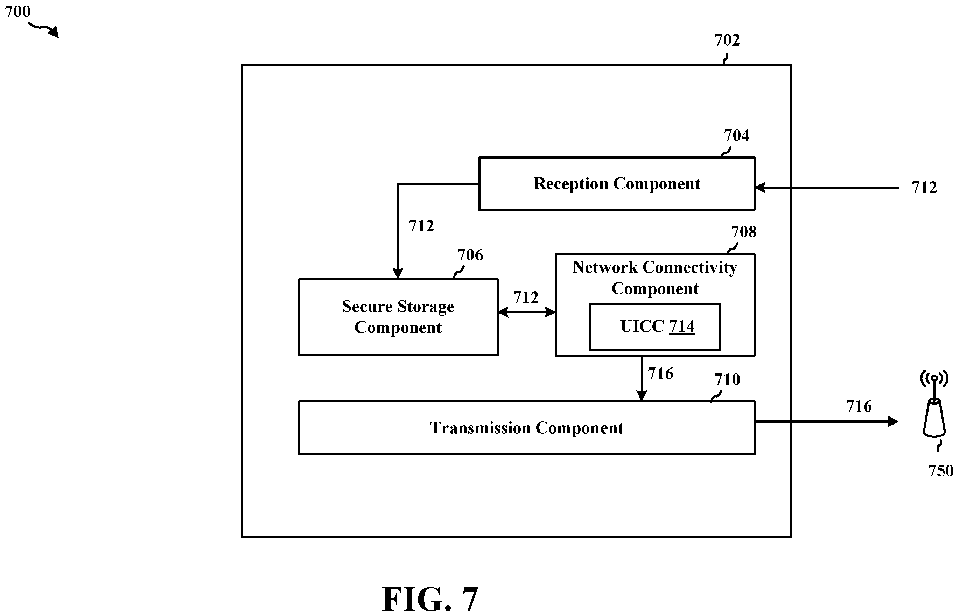

FIG. 7 is a conceptual data flow diagram 700 illustrating the data flow between different means/components in an exemplary apparatus 702. The apparatus may be a UE. The apparatus includes a reception component 704 that may receive information 712 (e.g., pre-configured information to assist with SUCI generation) from the network 750, secure storage component 706 that may be configured to store the information 912 in a secure manner, a network connectivity component 708 that may enable UE 702 to generate a SUCI 716 based at least in part on information stored in UICC 714 and information 712 obtained from secure storage component 706 is to be received via unicast or broadcast transmission, and a transmission component 710 to enable to UE 700 to use the SUCI 716 as part of accessing services.

The apparatus may include additional components that perform each of the blocks of the algorithm in the aforementioned flowcharts of FIGs. 5 and 6. As such, each block in the aforementioned flowcharts of FIGs. 5 and 6 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

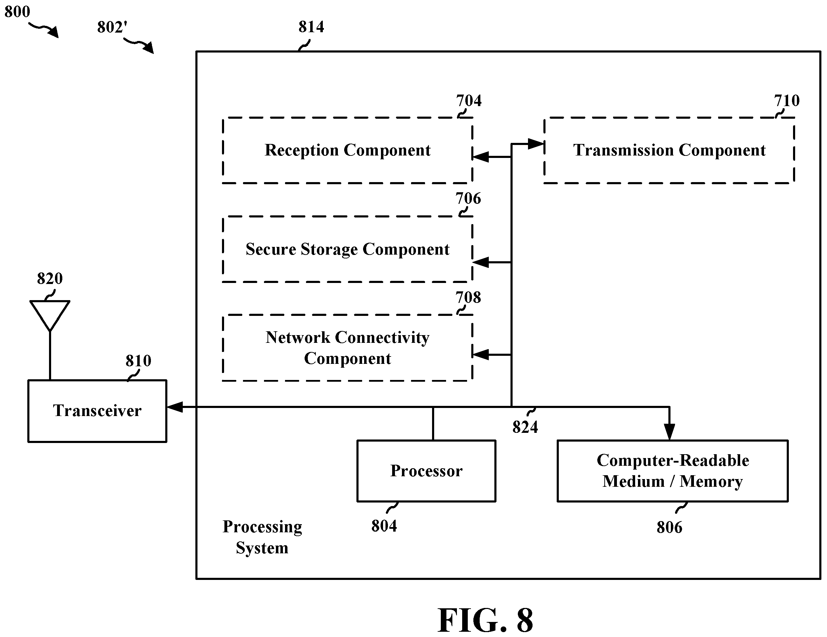

FIG. 8 is a diagram 800 illustrating an example of a hardware implementation for an apparatus 702' employing a processing system 814. The processing system 814 may be implemented with a bus architecture, represented generally by the bus 824. The bus 824 may include any number of interconnecting buses and bridges depending on the specific application of the processing system 814 and the overall design constraints. The bus 824 links together various circuits including one or more processors and/or hardware components, represented by the processor 804, the components 704, 706, 708, 710 and the computer-readable medium / memory 706. The bus 824 may also link various other circuits such as timing sources, peripherals, voltage regulators, and power management circuits, which are well known in the art, and therefore, will not be described any further.

The processing system 814 may be coupled to a transceiver 810. The transceiver 810 is coupled to one or more antennas 820. The transceiver 810 provides a means for communicating with various other apparatus over a transmission medium. The transceiver 810 receives a signal from the one or more antennas 820, extracts information from the received signal, and provides the extracted information to the processing system 814, specifically the reception component 804. In addition, the transceiver 810 receives information from the processing system 814, specifically the transmission component 810, and based on the received information, generates a signal to be applied to the one or more antennas 820. The processing system 814 includes a processor 804 coupled to a computer-readable medium / memory 806. The processor 804 is responsible for general processing, including the execution of software stored on the computer-readable medium / memory 806. The software, when executed by the processor 704, causes the processing system 814 to perform the various functions described *supra* for any particular apparatus. The computer-readable medium / memory 706 may also be used for storing data that is manipulated by the processor 704 when executing software. The processing system 814 further includes at least one of the components 704, 706, 708, 710. The components may be software components running in the processor 804, resident/stored in the computer readable medium / memory 806, one or more hardware components coupled to the processor 804, or some combination thereof. The processing system 814 may be a component of the UE 350 and may include the memory 360 and/or at least one of the TX processor 368, the RX processor 356, and the controller/processor 359.

In one configuration, the apparatus 702/702' for wireless communication includes means for determining that initial subscriber information associated with a UICC alone is insufficient to establish a secure connection with a 5G NR based network, means for obtaining additional subscriber information from a secure storage location which is separate from the UICC, means for generating a SUCI based on the additional subscriber information along with the initial subscriber information, and means for establishing the secure connection with the 5G NR based network based on the SUCI. The apparatus 702/702' for wireless communication further include means for pre-configuring the UE with the additional subscriber information, and means for storing the additional subscriber information in the secure storage location in the UE. The aforementioned means may be one or more of the aforementioned components of the apparatus 702 and/or the processing system 814 of the apparatus 702' configured to perform the functions recited by the aforementioned means. As described *supra,* the processing system 814 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

## Claims

1. A method of wireless communications performed by a user equipment, UE, the method comprising:
determining (504) that initial subscriber information associated with a universal integrated circuit card, UICC, alone is insufficient to establish a secure connection with a 5G new radio, NR, based network;
obtaining (508) additional subscriber information from a secure storage location of the UE which is separate from the UICC;
generating (510) a subscription concealed identifier, SUCI, based on the additional subscriber information along with the initial subscriber information; and
establishing the secure connection with the 5G NR based network based on the SUCI.

2. The method of claim 1, wherein the UICC is a pre-5G network based card, wherein the initial subscriber information includes international mobile subscriber identity, IMSI, associated information, and wherein the generating the SUCI comprises using the IMSI associated information along with the additional subscriber information to generate the SUCI.

3. The method of claim 2, wherein the IMSI associated information comprises mobile country code, MCC, information, mobile network code, MNC, information, mobile subscription identification number, MSIN, or any combination thereof.

4. The method of claim 1, wherein generating the SUCI comprises:
generating a subscription permanent identifier, SUPI, based on the additional subscriber information along with the initial subscriber information; and
generating the SUCI based on the SUPI.

5. The method of claim 1, wherein the UICC is a 5G based network card, and wherein determining that the initial subscriber information associated with the UICC alone is insufficient to establish the secure connection with the 5G NR based network comprises:
determining that one or more elementary files corresponding to service bits in a service table are not present.

6. The method of claim 1, wherein the UICC is a 5G based network card, and wherein determining that the initial subscriber information associated with the UICC alone is insufficient to establish the secure connection with the 5G NR based network further comprises:
failing to retrieve one or more elementary files corresponding to service bits in a service table from the 5G based network card.

7. The method of claim 1, wherein the additional subscriber information comprises a protection scheme identifier, a home network key identifier, a home network public key, a router indictor, or any combination thereof.

8. The method of claim 1, wherein the UE is pre-configured with the additional subscriber information; and further comprising:
storing the additional subscriber information in the secure storage location in the UE.

9. An apparatus for wireless communication and for use in a user equipment, UE, the apparatus comprising:
means for determining (504) that initial subscriber information associated with a universal integrated circuit card, UICC, alone is insufficient to establish a secure connection with a 5G new radio, NR, based network;
means for obtaining (508) additional subscriber information from a secure storage location of the UE which is separate from the UICC;
means for generating (510) a subscription concealed identifier, SUCI, based on the additional subscriber information along with the initial subscriber information; and
means for establishing the secure connection with the 5G NR based network based on the SUCI.

10. The apparatus of claim 9, wherein the UICC is a pre-5G network based card, wherein the initial subscriber information includes international mobile subscriber identity, IMSI, associated information, and wherein the means for generating the SUCI further comprises means for using the IMSI associated information along with the additional subscriber information to generate the SUCI, wherein the IMSI associated information comprises of mobile country code, MCC, information, mobile network code, MNC, information, mobile subscription identification number, MSIN, or any combination thereof.

11. The apparatus of claim 9, wherein means for generating the SUCI further comprises:
means for generating a subscription permanent identifier, SUPI, based on the additional subscriber information along with the initial subscriber information; and
means for generating the SUCI based on the SUPI.

12. The apparatus of claim 9, wherein the UICC is a 5G based network card, and wherein means for determining that the initial subscriber information associated with the UICC alone is insufficient to establish the secure connection with the 5G NR based network further comprises:
means for determining that one or more elementary files corresponding to service bits in a service table are not present.

13. The apparatus of claim 9, wherein the UICC is a 5G based network card, and wherein means for determining that the initial subscriber information associated with the UICC alone is insufficient to establish the secure connection with the 5G NR based network further comprises:
means for failing to retrieve one or more elementary files corresponding to service bits in a service table from the 5G based network card.

14. The apparatus of claim 9, wherein the UE is pre-configured with the additional subscriber information; and the apparatus further comprises:
means for storing the additional subscriber information in the secure storage location in the UE.

15. A computer-readable medium storing computer executable code for wireless communications by a user equipment, UE, the code comprising instructions executable by a processor of the UE to:
determine (504) that initial subscriber information associated with the UICC alone is insufficient to establish a secure connection with a 5G new radio, NR, based network;
obtain (508) additional subscriber information from a secure memory of the UE which is separate from the UICC;
generate (510) a subscription concealed identifier, SUCI, based on the additional subscriber information along with the initial subscriber information; and
establish the secure connection with the 5G NR based network based on the SUCI.

## Patentansprüche

1. Ein Verfahren für drahtlose Kommunikationen, durchgeführt durch eine Benutzervorrichtung bzw. UE (user equipment), wobei das Verfahren Folgendes aufweist:
Bestimmen (504), dass eine anfängliche Teilnehmerinformation, die mit einer UICC (universal integrated circuit card) assoziiert ist, allein nicht ausreicht, um eine sichere Verbindung mit einem 5G-New-Radio- bzw. -NR-basierten Netzwerk herzustellen;
Erlangen (508) zusätzlicher Teilnehmerinformation von einem sicheren Speicherort der UE, der von der UICC getrennt ist;
Erzeugen (510) eines SUCI (subscription concealed identifier) basierend auf der zusätzlichen Teilnehmerinformation zusammen mit der anfänglichen Teilnehmerinformation; und
Herstellen der sicheren Verbindung mit dem 5G-NR-basierten Netzwerk basierend auf dem SUCI.

2. Das Verfahren gemäß Anspruch 1, wobei die UICC eine vor-5G-Netzwerk-basierte Karte ist, wobei die anfängliche Teilnehmerinformation eine mit der internationalen mobilen Teilnehmeridentität bzw. IMSI (international mobile subscriber identity) assoziierte Information aufweist und wobei das Erzeugen des SUCI ein Verwenden der mit der IMSI assoziierten Information zusammen mit den zusätzlichen Teilnehmerinformation zum Erzeugen des SUCI aufweist.

3. Das Verfahren gemäß Anspruch 2, wobei die mit der IMSI assoziierte Information eine mobiler-Ländercode- bzw. MCC(mobile country code)-Information, eine mobiler-Netzwerkcode- bzw. MNC(mobile network code)-Information, eine mobile Teilnehmeridentifikationsnummer bzw. MSIN (mobile subscription identification number) oder eine beliebige Kombination davon aufweist.

4. Das Verfahren gemäß Anspruch 1, wobei das Erzeugen des SUCI aufweist:
Erzeugen eines SUPI (subscription permanent identifier) basierend auf der zusätzlichen Teilnehmerinformation zusammen mit der anfänglichen Teilnehmerinformation; und
Erzeugen des SUCI basierend auf dem SUPI.

5. Das Verfahren gemäß Anspruch 1, wobei die UICC eine 5G-basierte Netzwerkkarte ist und wobei das Bestimmen, dass die anfängliche Teilnehmerinformation, die mit der UICC assoziiert ist, allein nicht ausreicht, um die sichere Verbindung mit dem 5G-NR-basierten Netzwerk herzustellen, aufweist:
Bestimmen, dass eine oder mehrere Elementardateien, die Dienstbits in einer Diensttabelle entsprechen, nicht vorhanden sind.

6. Das Verfahren gemäß Anspruch 1, wobei die UICC eine 5G-basierte Netzwerkkarte ist und wobei das Bestimmen, dass die anfängliche Teilnehmerinformation, die mit der UICC assoziiert ist, allein nicht ausreicht, um die sichere Verbindung mit dem 5G-NR-basierten Netzwerk herzustellen, weiter aufweist:
Fehler beim Abrufen einer oder mehrerer Elementardateien, die Dienstbits in einer Diensttabelle entsprechen, von der 5G-basierten Netzwerkkarte.

7. Das Verfahren gemäß Anspruch 1, wobei die zusätzliche Teilnehmerinformation einen Schutzschemaidentifizierer, einen Heimnetzwerkschlüsselidentifizierer, einen öffentlichen Heimnetzwerkschlüssel, einen Routerindikator oder eine beliebige Kombination davon aufweist.

8. Das Verfahren gemäß Anspruch 1, wobei die UE mit der zusätzlichen Teilnehmerinformation vorkonfiguriert ist; und weiter aufweist:
Speichern der zusätzlichen Teilnehmerinformation an dem sicheren Speicherort in der UE.

9. Eine Vorrichtung zur drahtlosen Kommunikation und zur Verwendung in einer Benutzervorrichtung bzw. UE (user equipment), wobei die Vorrichtung aufweist:
Mittel zum Bestimmen (504), dass eine anfängliche Teilnehmerinformation, die mit einer UICC (universal integrated circuit card) assoziiert ist, allein nicht ausreicht, um eine sichere Verbindung mit einem 5G-New-Radio- bzw. -NR-basierten Netzwerk herzustellen;
Mittel zum Erlangen (508) zusätzlicher Teilnehmerinformation von einem sicheren Speicherort der UE, der von der UICC getrennt ist;
Mittel zum Erzeugen (510) eines SUCI (subscription concealed identifier) basierend auf der zusätzlichen Teilnehmerinformation zusammen mit der anfänglichen Teilnehmerinformation; und
Mittel zum Herstellen der sicheren Verbindung mit dem 5G-NR-basierten Netzwerk basierend auf dem SUCI.

10. Die Vorrichtung gemäß Anspruch 9, wobei die UICC eine vor-5G-Netzwerk-basierte Karte ist, wobei die anfängliche Teilnehmerinformation eine mit der internationalen mobilen Teilnehmeridentität bzw. IMSI (international mobile subscriber identity) assoziierte Information aufweist, und wobei das Mittel zum Erzeugen des SUCI weiter Mittel zum Verwenden der mit der IMSI assoziierten Information zusammen mit der zusätzlichen Teilnehmerinformation zum Erzeugen des SUCI aufweist, wobei die mit der IMSI assoziierte Information eine mobiler-Ländercode- bzw. MCC(mobile country code)-Information, eine mobiler-Netzwerkcode- bzw. MNC(mobile network code)-Information, eine mobile Teilnehmeridentifikationsnummer bzw. MSIN (mobile subscription identification number) oder eine beliebige Kombination davon aufweist.

11. Die Vorrichtung gemäß Anspruch 9, wobei das Mittel zum Erzeugen des SUCI weiter aufweist:
Mittel zum Erzeugen eines SUPI (subscription permanent identifier) basierend auf der zusätzlichen Teilnehmerinformation zusammen mit der anfänglichen Teilnehmerinformation; und
Mittel zum Erzeugen des SUCI basierend auf dem SUPI.

12. Die Vorrichtung gemäß Anspruch 9, wobei die UICC eine 5G-basierte Netzwerkkarte ist und wobei das Mittel zum Bestimmen, dass die anfängliche Teilnehmerinformation, die mit der UICC assoziiert ist, allein nicht ausreicht, um die sichere Verbindung mit dem 5G-NR-basierten Netzwerk herzustellen, weiter aufweist:
Mittel zum Bestimmen, dass eine oder mehrere Elementardateien, die Dienstbits in einer Diensttabelle entsprechen, nicht vorhanden sind.

13. Die Vorrichtung gemäß Anspruch 9, wobei die UICC eine 5G-basierte Netzwerkkarte ist, und wobei das Mittel zum Bestimmen, dass die anfängliche Teilnehmerinformation, die mit der UICC assoziiert ist, allein nicht ausreicht, um die sichere Verbindung mit dem 5G-NR-basierten Netzwerk herzustellen, weiter aufweist:
Mittel zum fehlschlagenden Abrufen einer oder mehrerer Elementardateien, die Dienstbits in einer Diensttabelle entsprechen, von der 5G-basierten Netzwerkkarte.

14. Die Vorrichtung gemäß Anspruch 9, wobei die UE mit der zusätzlichen Teilnehmerinformation vorkonfiguriert ist; und die Vorrichtung weiter aufweist:
Mittel zum Speichern der zusätzlichen Teilnehmerinformation an dem sicheren Speicherort in der UE.

15. Ein computerlesbares Medium, das computerausführbaren Code für drahtlose Kommunikationen durch eine Benutzereinrichtung bzw. UE speichert, wobei der Code Anweisungen aufweist, die durch einen Prozessor der UE ausführbar sind zum:
Bestimmen (504), dass eine anfängliche Teilnehmerinformation, die mit der UICC assoziiert ist, allein nicht ausreicht, um eine sichere Verbindung mit einem 5G-New-Radio- bzw. -NR-basierten Netzwerk herzustellen;
Erlangen (508) zusätzlicher Teilnehmerinformation von einem sicheren Speicherort der UE, der von der UICC getrennt ist;
Erzeugen (510) eines SUCI (subscription concealed identifier) basierend auf der zusätzlichen Teilnehmerinformation zusammen mit der anfänglichen Teilnehmerinformation; und
Herstellen der sicheren Verbindung mit dem 5G-NR-basierten Netzwerk basierend auf dem SUCI.

## Revendications

1. Procédé de communications sans fil effectué par un équipement utilisateur, UE, le procédé comprenant les étapes consistant à :
déterminer (504) que les informations initiales d'abonné associées à une carte à circuit intégré universelle, UICC, seules sont insuffisantes pour établir une connexion sécurisée avec un réseau basé sur la technologie 5G nouvelle radio, NR, ;
obtenir (508) des informations d'abonné supplémentaires à partir d'un emplacement de stockage sécurisé de l'UE qui sont distinctes de l'UICC ;
générer (510) un identifiant masqué d'abonnement, SUCI, sur la base des informations d'abonné supplémentaires ainsi que des informations d'abonné initiales ; et
établir la connexion sécurisée avec le réseau basé sur la technologie 5GNR, basé sur le SUCI.

2. Procédé selon la revendication 1, dans lequel l'UICC est une carte basée sur un réseau pré-5G, dans lequel les informations initiales d'abonné comprennent des informations associées à l'identité de l'abonné mobile international, IMSI, et dans lequel la génération du SUCI comprend l'utilisation des informations associées à l'IMSI avec les informations supplémentaires sur l'abonné pour générer le SUCI.

3. Procédé selon la revendication 2, dans lequel les informations associées à l'IMSI comprennent des informations d'indicatif de pays mobile, MCC, des informations de code de réseau mobile, MNC, le numéro d'identification d'abonnement mobile, MSIN, ou toute combinaison de ceux-ci.

4. Procédé selon la revendication 1, dans lequel la génération du SUCI comprend les étapes consistant à :
générer un identifiant permanent d'abonnement, SUPI, sur la base des informations d'abonné supplémentaires ainsi que des informations d'abonné initiales ; et
générer le SUCI sur la base du SUPI.

5. Procédé selon la revendication 1, dans lequel l'UICC est une carte réseau basée sur la 5G, et dans lequel la détermination du fait que les informations initiales d'abonné associées à l'UICC seules sont insuffisantes pour établir la connexion sécurisée avec le réseau basé sur la technologie 5G NR comprend l'étape consistant à:
déterminer qu'un ou plusieurs fichiers élémentaires correspondant à des bits de service dans une table de service ne sont pas présents.

6. Procédé selon la revendication 1, dans lequel l'UICC est une carte réseau basée sur la 5G, et dans lequel la détermination du fait que les informations initiales d'abonné associées à l'UICC seules sont insuffisantes pour établir la connexion sécurisée avec le réseau basé sur la technologie 5G NR comprend en outre l'étape consistant à :
ne pas parvenir à récupérer un ou plusieurs fichiers élémentaires correspondant à des bits de service dans une table de service à partir de la carte réseau basée sur la 5G.

7. Procédé selon la revendication 1, dans lequel les informations supplémentaires sur l'abonné comprennent un identifiant de système de protection, un identifiant de clé de réseau d'origine de l'abonné, une clé publique de réseau d'origine de l'abonné, un indicateur de routeur, ou toute combinaison de ceux-ci.

8. Procédé selon la revendication 1, dans lequel l'UE est préconfiguré avec les informations d'abonné supplémentaires ; et comprenant en outre l'étape consistant à :
stocker les informations d'abonné supplémentaires dans l'emplacement de stockage sécurisé dans l'UE.

9. Appareil pour communication sans fil et destiné à être utilisé dans un équipement utilisateur, UE, l'appareil comprenant :
des moyens pour déterminer (504) que les informations initiales d'abonné associées à une carte à circuit intégré universelle, UICC, seules sont insuffisantes pour établir une connexion sécurisée avec un réseau basé sur la technologie 5G nouvelle radio, NR ;
des moyens pour obtenir (508) des informations d'abonné supplémentaires à partir d'un emplacement de stockage sécurisé de l'UE qui sont distinctes de l'UICC ;
des moyens pour générer (510) un identifiant masqué d'abonnement, SUCI, sur la base des informations d'abonné supplémentaires ainsi que des informations d'abonné initiales ; et
des moyens pour établir la connexion sécurisée avec le réseau basé sur la technologie 5G NR, sur la base du SUCI.

10. Appareil selon la revendication 9, dans lequel l'UICC est une carte basée sur un réseau pré-5G, dans lequel les informations initiales d'abonné comprennent des informations associées à l'identité de l'abonné mobile international, IMSI, et dans lequel les moyens pour générer le SUCI comprennent en outre des moyens pour utiliser des informations associées à l'IMSI ainsi que des informations d'abonné supplémentaires pour générer le SUCI, les informations associées à l'IMSI comprenant des informations d'indicatif de pays mobile, MCC, des informations de code de réseau mobile, MNC, le numéro d'identification d'abonnement mobile, MSIN, ou toute combinaison de ceux-ci.

11. Appareil selon la revendication 9, dans lequel les moyens pour générer le SUCI comprennent en outre :
des moyens pour générer un identifiant permanent d'abonnement, SUPI, sur la base des informations d'abonné supplémentaires ainsi que des informations d'abonné initiales ; et
des moyens pour générer le SUCI sur la base du SUPI.

12. Appareil selon la revendication 9, dans lequel l'UICC est une carte réseau basée sur la 5G, et dans lequel les moyens pour déterminer que les informations initiales d'abonné associées à l'UICC seules sont insuffisantes pour établir la connexion sécurisée avec le réseau basé sur la technologie 5G NR comprennent en outre :
des moyens pour déterminer qu'un ou plusieurs fichiers élémentaires correspondant à des bits de service dans une table de service ne sont pas présents.

13. Appareil selon la revendication 9, dans lequel l'UICC est une carte réseau basée sur la 5G, et dans lequel les moyens pour déterminer que les informations initiales d'abonné associées à l'UICC seules sont insuffisantes pour établir la connexion sécurisée avec le réseau basé sur la technologie 5G NR comprennent en outre :
des moyens pour ne pas récupérer un ou plusieurs fichiers élémentaires correspondant à des bits de service dans une table de service à partir de la carte réseau basée sur la 5G.

14. Appareil selon la revendication 9, dans lequel l'UE est préconfiguré avec les informations d'abonné supplémentaires ; et l'appareil comprend en outre :
des moyens pour stocker les informations d'abonné supplémentaires dans l'emplacement de stockage sécurisé dans l'UE.

15. Support lisible par ordinateur stockant un code exécutable par ordinateur pour des communications sans fil par un équipement utilisateur, UE, le code comprenant des instructions exécutables par un processeur de l'UE pour :
déterminer (504) que les informations d'abonné initiales associées à l'UICC seules sont insuffisantes pour établir une connexion sécurisée avec un réseau basé sur la technologie 5G nouvelle radio, NR, ;
obtenir (508) des informations d'abonné supplémentaires à partir d'une mémoire sécurisée de l'UE qui est distincte de l'UICC ;
générer (510) un identifiant masqué d'abonnement, SUCI, sur la base des informations d'abonné supplémentaires ainsi que des informations d'abonné initiales ; et
établir la connexion sécurisée avec le réseau basé sur la technologie 5GNR, basé sur le SUCI.
